# EUROPEAN PATENT APPLICATION

(11) **EP 3 547 274 A1**
(43) Date of publication of application: **02.10.2019**
(21) Application number: 19165654.5
(22) Date of filing: 27.03.2019
(51) Int. Cl.: G07F 19/00

(54) **AN APPARATUS FOR DISPENSING CASH BILLS**

(30) Priority: 27.03.2018 US 201815937745
(71) Applicant: Capital One Services, LLC, McLean, VA 22102 (US)
(72) Inventor: WURMFELD, David, Fairfax, VA 22030 (US); ZARAKAS, James, McLean, VA (US); KOEPPEL, Adam R., Washington, D.C. 20010 (US); LOCKE, Tyler, Washington, D.C. 20002 (US)
(74) Representative: Finnegan Europe LLP

(57) **Abstract**

An apparatus for dispensing cash bills is provided. The apparatus may include a housing with an access port, a cash dispenser, and a cash cartridge removably mounted within the housing. The cash cartridge may be insertable and removable through the access port. The cash cartridge may also be adapted to store a plurality of bills for dispensing and removably coupled to the cash dispenser. The apparatus may communicate with a user exclusively through a first communication unit via an RF network and may include a second communication unit for communicating with a financial service provider via a VICTORY-standard network.

## Description

### TECHNICAL FILED

The present disclosure relates to an apparatus and a method for dispensing cash bills and, more particularly, to an apparatus for dispensing cash bills to customers in disaster areas.

### BACKGROUND

Natural disasters, such as hurricanes, tornados, earthquakes, or the like, oftentimes cause massive infrastructure breakdowns, such as electrical power outages, telephone service outages, internet service outages, or the like. Because the functioning of various financial networks heavily relies on this infrastructure, people in disaster areas often cannot use credit cards or debit cards for acquiring necessities in an emergency. Therefore, providing cash to people affected by the natural disaster is crucial for expedited recovery.

Mobile automatic teller machines (ATMs) can play an important role in supplying cash to people in disaster areas. Recently, some financial service providers have dispatched trucks equipped with mobile ATMs into the disaster areas. However, it has been shown that mobile ATM trucks may not be an effective solution, especially for the severely impacted disaster areas. For example, mobile ATM trucks often cannot reach places where the approach roads have been totally destroyed due to flooding. It is therefore desirable to provide a small and light ATM device that can easily be airlifted and transported by an aircraft to the severely impacted disaster areas. In view of the shortcomings of the current approach, there exists a need for improvements in mobile ATMs to provide the cash quickly and effectively to people in severely impacted disaster areas.

### SUMMARY

Disclosed embodiments provide an apparatus for dispensing cash bills. An apparatus for dispensing cash bills to a user may include a housing comprising an access port, a cash dispenser, a cash cartridge removably mounted within the housing. The cash cartridge may be insertable and removable through the access port. The cash cartridge may also be adapted to store a plurality of bills for dispensing and removably coupled to the cash dispenser. The apparatus may also include a first communication unit for communicating with the user and a second communication unit for communicating with a financial service provider. The second communication unit may be configured to transmit and receive information over a government-enabled communication network.

Furthermore, the apparatus may include one or more memories storing instructions and one or more processors executing the instructions to perform operations. The operations may include receiving a cash withdrawal request through the first communication unit. The operations may also include transmitting an authorization request associated with the cash withdrawal request to the financial service provider through the second communication unit. When the apparatus receives authorization from the financial service provider, the cash dispenser may be activated to dispense bills from the cash cartridge.

The foregoing general description and the following detailed description are exemplary and explanatory only and are not restrictive of the claims.

### BRIEF DESCRIPTION OF THE DRAWINGS

The accompanying drawings, which are incorporated in and constitute a part of this specification, illustrate several embodiments and, together with the description, serve to explain the disclosed principles. In the drawings:
FIG. 1 is a perspective view of an exemplary apparatus for dispensing cash bills, consistent with disclosed embodiments.
FIG. 2 is a side view of apparatus of FIG. 1, consistent with disclosed embodiments.
FIG. 3 is a rear view of apparatus of FIG. 1, consistent with disclosed embodiments.
FIG. 4 is a block diagram illustrating an exemplary implementation of a cash dispensing system using the apparatus of FIG. 1.

### DESCRIPTION OF THE EMBODIMENTS

As described in further detail herein, the disclosed embodiments are directed to an apparatus and a method for dispensing cash bills. Reference will now be made in detail to exemplary embodiments, examples of which are illustrated in the accompanying drawings and disclosed herein. Wherever convenient, the same reference numbers will be used throughout the drawings to refer to the same or like parts.

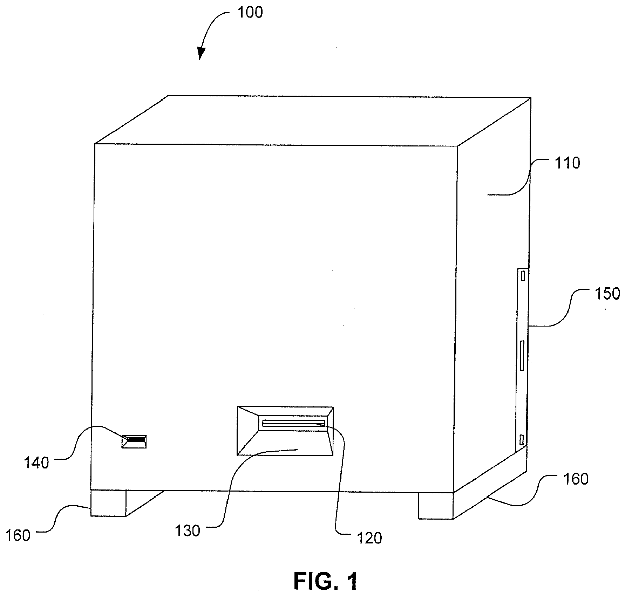

FIG. 1 is a perspective view of an exemplary apparatus 100 for dispensing cash bills, consistent with disclosed embodiments. In some embodiments, apparatus 100 may include a housing 110 with an access port 150 in a lower portion of the rear side of housing 110. In some embodiments, housing 110 may also include an output slot 120 of a cash dispenser unit internal to housing 110 and not shown in FIG. 1. Output slot 120 delivers cash bills to a user. In some embodiments, output slot 120 is positioned within a recessed pocket 130 of housing 110.

In some embodiments, housing 110 may also include a first electrical connector 140 coupled to housing 110. First electrical connector 140 may be configured to provide electrical power to a user device. Furthermore, in some embodiments, the first electrical connector 140 may comprise an industry-standard type connector that may supply electrical power to various types of user devices. For example, first electrical connector 140 may comprise a USB-type connector or an Apple Lightning-type connector.

In some embodiments, apparatus 100 may further comprise a ruggedized outer shell (not shown) covering housing 110 for enhanced protection from external forces. In some embodiments, apparatus 100 may also include a mounting unit (e.g. mounting bracket) 160 compatible with military standard pallets. In such embodiments, for example, apparatus 100 may be secured on a military standard pallet via the mounting unit 160, and easily be airlifted by a helicopter, a Military Air Transport (MATS), or a civilian aircraft. In some embodiments, the mounting unit and the footprint of apparatus 100 may comply with Vehicular Integration for C4ISR/EW Interoperability (VICTORY) mechanical interface to ensure compatibility with the North Atlantic Treaty Organization (NATO) military cargo pallets for air transport and sea transport.

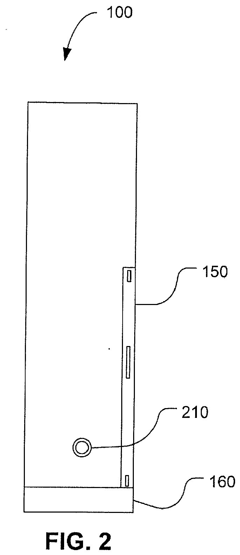

FIG. 2 is a side view of apparatus 100 shown in FIG. 1, consistent with disclosed embodiments. In some embodiments, apparatus 100 may include a second electrical connector 210 coupled to housing 110. Second electrical connector 210 may be configured to receive electrical power for internal components of apparatus 100. In some embodiments, second electrical connector 210 may be a type of connector compatible with the Vehicular Integration for C4ISR/EW Interoperability (VICTORY) Standard electrical interface. The current version of the VICTORY Standard specification is available on the VICTORY Standard web portal at https://www.victory-standards.org. In such embodiments, apparatus 100 may receive electrical power from any platform supporting the VICTORY Standard interface, such as a military vehicle, an emergency dispatch vehicle, a vehicle with NATO vehicle interfaces, or the like. In some embodiments, second electrical connector 210 may be a military-standard 24-volt power supply connector.

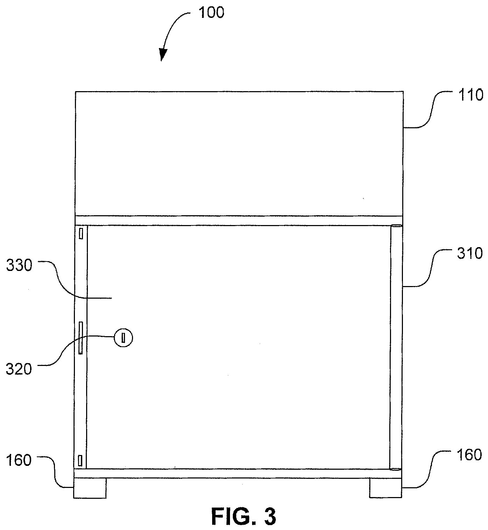

FIG. 3 is a rear view of apparatus 100 shown in FIG. 1, consistent with disclosed embodiments. In some embodiments, access port 150 may include an access port door 330 with a lock 320 which may control access to the interior of apparatus 100. When unlocked by an authorized person, access port 150 may provide access to the interior of apparatus 100. In some embodiments, access port door 330 may be coupled to housing 110 with a plurality of door hinges 310.

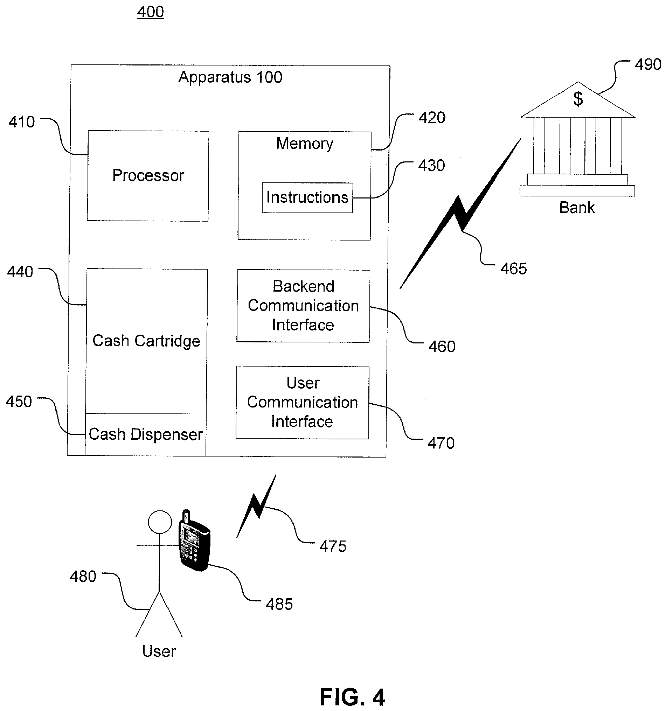

FIG. 4 is a block diagram illustrating an exemplary implementation of a cash dispensing system 400 using apparatus 100 shown in FIGs. 1-3. In this implementation, a user 480 may initiate cash withdrawal transaction with a user device 485 by communicating with apparatus 100 over a wireless communication network 475 to transmit a withdrawal request. When apparatus 100 receives a withdrawal request from user device 475, apparatus 100 may transmit an authorization request associated with the user's cash withdrawal request to a financial service provider 490 (e.g. a bank, credit card transaction provider, etc.). Upon receipt of authorization from financial service provider 490, apparatus 100 may dispense the authorized amount of cash bills to user 480.

In some embodiments, apparatus 100 may include one or more processors 410 and one or more memory devices 420. Processor 410 may be implemented as a single-core or multiple-core processor that may execute parallel processes simultaneously. In some embodiments, processor 410 may be a single core processor configured with virtual processing technologies. In some embodiments, processor 410 may use logical processors to simultaneously execute and control multiple processes. Processor 410 may implement virtual machine technologies, or other known technologies to provide the ability to execute, control, run, manipulate, store, etc. multiple software processes, applications, programs, etc. In another embodiment, processor 410 may include a multiple-core processor arrangement (e.g., dual, quad core, etc.) configured to provide parallel processing functionalities to allow the apparatus 100 to execute multiple processes simultaneously. One of ordinary skill in the art would understand that other types of processor arrangements could be implemented that provide for the capabilities disclosed herein. The disclosed embodiments are not limited to any type of processor(s) configured in the apparatus 100.

Memory 420 may include one or more storage devices configured to store data and instructions used by processor 410 to perform functions related to the disclosed embodiments. For example, memory 420 may be configured with software instructions, such as instructions 430 that may perform operations when executed by processor 410. Memory 420 may be a volatile or non-volatile, magnetic, semiconductor, tape, optical, removable, non-removable, or other type of storage device or tangible (i.e., non-transitory) computer-readable medium.

The disclosed embodiments are not limited to separate programs or computers configured to perform dedicated tasks. In some embodiments, instructions 430 may be stored in an external storage device, such as a cloud server located outside of apparatus 100, and processor 410 may execute instructions 430 remotely.

Memory 420 may also store data that may reflect any type of information in any format that the system may use to perform operations consistent with the disclosed embodiments. Memory 420 may store instructions 430 to enable processor 410 to execute, such as financial transaction applications, server applications, authentication applications, network communication processes, and any other type of application or program. Alternatively, the instructions 430 may be stored in an external storage (not shown) in communication with apparatus 100 via network 465 or any other suitable network.

In some embodiments, apparatus 100 may include a cash cartridge 440 removably installed inside of housing 110. In some embodiments, output slot 120 (shown in FIG. 1) may be connected to a cash dispenser unit 450 which may be located inside of housing 110. In some embodiments, cash cartridge 440 may be removably coupled to cash dispenser unit 450 and configured to store a plurality of cash bills for dispensing by cash dispenser unit 450. For example, cash dispenser unit 450, under control of processor 410, may extract from cash cartridge 440 an amount of cash bills specified by a withdrawal request and dispense the bills to user through output slot 120.

In some embodiments, cash cartridge 440 may be configured to be inserted and removed through access port 150. For example, when a cash cartridge 440 currently installed within apparatus 100 runs out of cash bills, it may be replaced by an authorized person with a new cash cartridge through access port 150. Furthermore, cash cartridge 440, in some embodiments, may comprise a dye pack (not shown) configured to explode upon detection of an unauthorized intrusion and release a dye to permanently stain cash bills stored therein, thus rendering the bills unusable. In some embodiments, apparatus 100 may include additional security features. For example, apparatus 100 may include an alarm (not shown) that may go off if apparatus 100 is disconnected from power supply on second electrical connector 210 in FIG. 2. Apparatus 100 may further send out, through network 465, a broadcast message indicating unauthorized accesses or theft.

In some embodiments, apparatus 100 may also include a user communication interface 470 to facilitate direct communication between apparatus 100 and user device 485 through wireless communication network 475. In some embodiments, wireless communication network 475 may comprise a radio frequency (RF) direct communication network, such as, for example, Bluetooth, Wi-Fi, Near-Field Communication (NFC), or other suitable communication methods that implement the transmission of data between separate devices. In such embodiment, user communication interface 470 may be configured to communicate with an RF transceiver of user device 485.

In some embodiments, user communication interface 470 may comprise a proximity sensor. In such embodiments, processor 410 may execute instructions 430 to perform operations to determine whether user device 485 is within a predetermined distance or range of distance of apparatus 100 to permit communication via a wireless communication network 475. For example, in certain aspects, apparatus 100 may determine whether user device 485 is within one foot, two feet, six inches, etc. of apparatus 100.

In some embodiments, all communication between user 480 and apparatus 100 must occur exclusively via user communication interface 470 over wireless communication network 475. In such embodiments, apparatus 100 is devoid of any other means for user interface, such as a numeric key pad, an LCD touch screen, or a credit/debit card reader, or the like. In such embodiments, a withdrawal request from user 480 is exclusively communicated by user device 485 via wireless communication network 475 to user communication interface 470.

In some embodiments, apparatus 100 may also include a backend communication interface 460 configured to facilitate communication with a financial service provider 490 through a network 465. In some embodiments, network 465 may be a government-enabled communication network implemented in the disaster area, such as, for example, a VICTORY Standard-compliant in-vehicle network. For example, apparatus 100 may be deployed to disaster area after being installed in a military or emergency vehicle equipped with a VICTORY Standard-compliant in-vehicle network. In such case, apparatus 100 may be connected to the VICTORY in-vehicle network of the vehicle for communication with financial service provider 490 through backend communication interface 460. In some embodiments, backend communication interface 460 may be configured to transmit and receive information over a military emergency wireless network or a disaster relief support system. However, in other applications, network 465 may be a cellular network, the Internet, a private data network, a virtual private network using a public network, an in-vehicle network, a Wi-Fi network, a LAN or WAN network, or the like.

In some embodiments, user 480 may initiate a cash withdrawal operation by transmitting a cash withdrawal request from user device 485 to apparatus 100. Processor 410 may then execute instructions 430 to perform a cash dispensing operation. For example, the apparatus 100 may receive the cash withdrawal request from user device 485 through user communication interface 470, transmit an authorization request associated with the cash withdrawal request to financial service provider 490. Upon receiving an authorization from the financial service provider 490 processor 410 may activate cash dispenser 450 to dispense cash bills equal to the withdrawal amount.

In some embodiments, financial service provider 490 may preprogram instructions 430 such that apparatus 100 may dispense only a fixed amount of cash bills to user 480 at one time. In other embodiments, user 480 may specify the withdrawal amount. In such embodiments, apparatus 100 may dispense cash bills equal to the amount requested by the user 480 upon the receipt of authorization from the financial service provider 490.

In some embodiments, first electrical connector 140 (FIG. 1) may be configured to provide electrical power to a user device 485. For example, when the battery level of user device 485 is too low to initiate communication with apparatus 100 over wireless communication network 475, user 480 may connect user device 485 to apparatus 100 via first electrical connector 140 to quickly charge and power up user device 485. Furthermore, in some embodiments, first electrical connector 140 may comprise an industry standard-type power connector such as, for example, a USB connector or an Apple Lightning connector.

The foregoing description has been presented for purposes of illustration. It is not exhaustive and is not limited to the precise forms or embodiments disclosed. Modifications and adaptations of the embodiments will be apparent from consideration of the specification and practice of the disclosed embodiments. For example, the described implementations include hardware and software, but systems and methods consistent with the present disclosure can be implemented as hardware alone.

Computer programs based on the written description and methods of this specification are within the skill of a software developer. The various programs or program modules can be created using a variety of programming techniques. For example, program sections or program modules can be designed in or by means of Java™ (see https://docs.oracle.com/javase/8/docs/technotes/guides/language/), C, C++, assembly language, or any such programming languages. One or more of such software sections or modules can be integrated into a computer system, non-transitory computer-readable media, or existing communications software.

Moreover, while illustrative embodiments have been described herein, the scope includes any and all embodiments having equivalent elements, modifications, omissions, combinations (e.g., of aspects across various embodiments), adaptations or alterations based on the present disclosure. The elements in the claims are to be interpreted broadly based on the language employed in the claims and not limited to examples described in the present specification or during the prosecution of the application, which examples are to be construed as non-exclusive. Further, the steps of the disclosed methods can be modified in any manner, including by reordering steps or inserting or deleting steps. It is intended, therefore, that the specification and examples be considered as exemplary only, with a true scope being indicated by the following claims and their full scope of equivalents.

Further features in accordance with embodiments, are set out in the below clauses.
1. An apparatus for dispensing cash bills to a user, comprising:
   a housing comprising an access port;
   a cash dispenser;
   a cash cartridge removably mounted within the housing, the cash cartridge being:
      insertable and removable through the access port;
      adapted to store a plurality of bills for dispensing; and
      removably coupled to the cash dispenser;
      a first communication unit for communicating with the user;
      a second communication unit for communicating with a financial service provider, the second communication unit being configured to transmit and receive information over a government-enabled communication network;
      one or more memories storing instructions; and
      one or more processors executing the instructions to perform operations comprising:
         receiving a cash withdrawal request through the first communication unit;
         transmitting, to the financial service provider through the second communication unit, an authorization request associated with the cash withdrawal request; and
         upon receipt of authorization from the financial service provider, activating the cash dispenser to dispense bills from the cash cartridge.
2. The apparatus of clause 1, wherein the first communication unit is configured to communicate with an RF transceiver of a user device.
3. The apparatus of clause 2, wherein the first communication unit comprises a proximity sensor configured to detect whether the user device is within a predetermined distance of the apparatus.
4. The apparatus of any preceding clause, wherein the government-enabled communication network comprises a Vehicular Integration for C4ISR/EW Interoperability (VICTORY) Standard-compliant network.
5. The apparatus of any preceding clause, further comprising a mounting unit coupled to the housing, the mounting unit being compatible with a Vehicular Integration for C4ISR/EW Interoperability (VICTORY) Standard.
6. The apparatus of any preceding clause, further comprising a first electrical connector coupled to the housing and configured to supply power to a user device.
7. The apparatus of any preceding clause, further comprising a second electrical connector, the second electrical connector being:
   coupled to the housing;
   configured to receive power for the apparatus; and
   compatible with a Vehicular Integration for C4ISR/EW Interoperability (VICTORY) Standard.
8. The apparatus of any preceding clause, wherein the cash cartridge comprises a dye pack configured to explosively release a dye to stain the plurality of bills, upon detection of an unauthorized intrusion.
9. The apparatus of any preceding clause, wherein the operations further comprise:
   receiving a request for a withdrawal amount via the first communication unit; and
   dispensing bills in accordance with the withdrawal amount.
10. The apparatus of any preceding clause, wherein the operations further comprise:
   dispensing bills in accordance with a preconfigured withdrawal amount.
11. An apparatus for dispensing cash bills to a user, comprising:
   a housing comprising an access port;
   a cash dispenser;
   a cash cartridge removably mounted within the housing, the cash cartridge being:
      insertable and removable through the access port;
      adapted to store a plurality of bills for dispensing; and
      removably coupled to the cash dispenser;
      a first communication unit for communicating with a user device only via an RF signal,
      wherein all communication with the user occurs via the first communication unit;
      a second communication unit for communicating with a financial service provider;
      one or more memories storing instructions;
      one or more processors executing the instructions to perform operations comprising:
         receiving a cash withdrawal request through the first communication unit from the user device;
         transmitting, to the financial service provider through the second communication unit, an authorization request associated with the cash withdrawal request; and
         upon receipt of authorization from the financial service provider, activating the cash dispenser to dispense bills from the cash cartridge.
12. The apparatus of clause 11, wherein the first communication unit is configured to communicate with an RF transceiver of the user device.
13. The apparatus of clause 11 or 12, wherein the first communication unit comprises a proximity sensor configured to detect whether the user device is within a predetermined distance of the apparatus.
14. The apparatus of any one of clauses 11 to 13, wherein the second communication unit is configured to transmit and receive information over a Vehicular Integration for C4ISR/EW Interoperability (VICTORY) Standard-compliant network.
15. The apparatus of any one of clauses 11 to 14, wherein the second communication unit is configured to transmit and receive information over at least one of cellular network, a Wi-Fi, or a military emergency wireless network.
16. The apparatus of any one of clauses 11 to 15, further comprising a first electrical connector coupled to the housing and configured to provide power to the user device.
17. The apparatus of any one of clauses 11 to 16, further comprising a second electrical connector, the second electrical connector being:
   coupled to the housing;
   configured to receive power for the apparatus; and
   compatible with a Vehicular Integration for C4ISR/EW Interoperability (VICTORY) Standard.
18. The apparatus of any one of clauses 11 to 17, wherein the cash cartridge comprises a dye pack configured to explosively release a dye to stain the plurality of bills upon detection of an unauthorized intrusion.
19. The apparatus of any one of clauses 11 to 18, wherein the operations further comprise:
   dispensing bills in accordance with a preconfigured withdrawal amount.
20. A computer-implemented method for dispensing cash bills to a user, comprising:
   receiving a cash withdrawal request through a first communication unit from a user device;
   transmitting, to a financial service provider through a second communication unit, an authorization request associated with the cash withdrawal request, the second communication unit being configured to transmit and receive information over a Vehicular Integration for C4ISR/EW Interoperability (VICTORY) Standard-compliant network;
   receiving an authorization from the financial service provider through the second communication unit; and
   activating a cash dispenser to dispense bills from a cash cartridge removably coupled to the cash dispenser.

## Claims

1. An apparatus for dispensing cash bills to a user, comprising:
a housing comprising an access port;
a cash dispenser;
a cash cartridge removably mounted within the housing, the cash cartridge being:
insertable and removable through the access port;
adapted to store a plurality of bills for dispensing; and
removably coupled to the cash dispenser;
a first communication unit for communicating with the user;
a second communication unit for communicating with a financial service provider, the second communication unit being configured to transmit and receive information over a government-enabled communication network;
one or more memories storing instructions; and
one or more processors configured in use to execute the instructions to perform operations comprising:
receiving a cash withdrawal request through the first communication unit;
transmitting, to the financial service provider through the second communication unit, an authorization request associated with the cash withdrawal request; and
upon receipt of authorization from the financial service provider, activating the cash dispenser to dispense bills from the cash cartridge.

2. The apparatus of claim 1, wherein the first communication unit is configured to communicate with an RF transceiver of a user device.

3. The apparatus of claim 1 or 2, wherein the first communication unit is configured to communicate with a user device via an RF signal, and wherein all communication with the user occurs via the first communication unit.

4. The apparatus of claim 2 or 3, wherein the first communication unit comprises a proximity sensor configured to detect whether the user device is within a predetermined distance of the apparatus.

5. The apparatus of any preceding claim, wherein the second communication network is further configured to transmit and receive information over any one of: a military emergency wireless network, a cellular network, a Wi-Fi network.

6. The apparatus of any preceding claim, wherein the government-enabled communication network comprises a Vehicular Integration for C4ISR/EW Interoperability (VICTORY) Standard-compliant network.

7. The apparatus of any preceding claim, further comprising a mounting unit coupled to the housing, the mounting unit being compatible with a Vehicular Integration for C4ISR/EW Interoperability (VICTORY) Standard.

8. The apparatus of any preceding claim, further comprising a first electrical connector coupled to the housing and configured to supply power to a user device.

9. The apparatus of any preceding claim, further comprising a second electrical connector, the second electrical connector being:
coupled to the housing;
configured to receive power for the apparatus; and
compatible with a Vehicular Integration for C4ISR/EW Interoperability (VICTORY) Standard.

10. The apparatus of any preceding claim, wherein the cash cartridge comprises a dye pack configured to explosively release a dye to stain the plurality of bills, upon detection of an unauthorized intrusion.

11. The apparatus of any preceding claim, wherein the one or more processors are configured in use to execute instructions to perform operations further comprising:
receiving a request for a withdrawal amount via the first communication unit; and
dispensing bills in accordance with the withdrawal amount.

12. The apparatus of any one of claims 1 to 10, wherein the one or more processors are configured in use to execute instructions to perform operations further comprising:
dispensing bills in accordance with a preconfigured withdrawal amount.

13. A computer-implemented method for dispensing cash bills to a user, comprising:
receiving a cash withdrawal request through a first communication unit from a user device;
transmitting, to a financial service provider through a second communication unit, an authorization request associated with the cash withdrawal request, the second communication unit being configured to transmit and receive information over a government-enabled communication network;
receiving an authorization from the financial service provider through the second communication unit; and
activating a cash dispenser to dispense bills from a cash cartridge removably coupled to the cash dispenser.

14. The method of claim 13, wherein the government-enabled communication network comprises a Vehicular Integration for C4ISR/EW Interoperability (VICTORY) Standard-compliant network, and the method comprises:
transmitting the authorization request to the financial service provider over the VICTORY Standard-compliant network.
